# EUROPEAN PATENT APPLICATION

(11) **EP 4 852 374 A1**
(43) Date of publication of application: **09.12.2026**
(21) Application number: 26181520.3
(22) Date of filing: 28.05.2026
(51) Int. Cl.: H04L 9/40, H04W 12/63

(54) **USER AUTHENTICATION DEVICE AND USER AUTHENTICATION SYSTEM**

(30) Priority: 02.06.2025 KR 20250072399; 14.08.2025 KR 20250113574
(71) Applicant: Ghost Pass Inc., Gwangju 61226 (KR)
(72) Inventor: LEE, Seon Gwan, 61641 Gwangju (KR)
(74) Representative: Zacco Sweden AB

(57) **Abstract**

A user authentication device and a user authentication system are provided. A method, performed by a user authentication device, of monitoring real-time information of a user authentication request device includes determining whether the user authentication device has entered an identification signal area set based on a location of the user authentication request device, receiving an identification signal, based on determining that the user authentication device has entered the identification signal area, determining whether identification information included in the identification signal matches prestored reference information by comparing the identification information with the prestored reference information, and monitoring real-time information of the user authentication request device through a server, based on determining that the identification information matches the reference information.

## Description

### BACKGROUND

### 1. Field

The disclosure relates to a user authentication device and a user authentication system.

### 2. Description of the Related Art

Recently, with the advancement of smart device technologies, including smartphones, and the development of network technologies, it has become a familiar experience to see biometric information being collected through devices commonly used in everyday life, such as smart devices or kiosks, and user authentication being performed based on the biometric information to make payments for products or obtain access authorization.

Because user authentication is a fundamental procedure for preventing identity theft, security may be regarded as the most important factor in user authentication technology.

Therefore, there is a continuing need for the development of user authentication technologies capable of providing convenience of authentication to users while maintaining a high level of security.

The aforementioned background technology is technical information possessed by the inventors for the derivation of the disclosure or obtained by the inventors during the derivation of the disclosure, and is not necessarily known technology disclosed to the general public prior to the filing of the disclosure.

### SUMMARY

The disclosure provides a user authentication device and a user authentication system. The problems to be solved by the disclosure are not limited to those described above, and other problems and advantages of the disclosure that are not described herein will be understood from the following description and will be more clearly understood from embodiments of the disclosure. Furthermore, it will be appreciated that the problems to be solved by the disclosure and the advantages of the disclosure may be realized by the means indicated in the claims and combinations thereof.

A first aspect of the disclosure provides a method, performed by a user authentication device, of monitoring real-time information of a user authentication request device, the method including determining whether the user authentication device has entered an identification signal area set based on a location of the user authentication request device, receiving an identification signal, based on determining that the user authentication device has entered the identification signal area, determining whether identification information included in the identification signal matches prestored reference information by comparing the identification information with the prestored reference information, and monitoring real-time information of the user authentication request device through a server, based on determining that the identification information matches the reference information.

A second aspect of the disclosure provides a user authentication device including a memory storing at least one program and a processor configured to be operated by executing the at least one program, wherein the processor is further configured to determine whether the user authentication device has entered an identification signal area set based on a location of a user authentication request device, receive an identification signal, based on determining that the user authentication device has entered the identification signal area, determine whether identification information included in the identification signal matches prestored reference information by comparing the identification information with the prestored reference information, and monitor real-time information of the user authentication request device through a server, based on determining that the identification information matches the reference information.

A third aspect of the disclosure provides a computer-readable recording medium having recorded thereon a program for causing a computer to perform the method according to the first aspect of the disclosure.

A fourth aspect of the disclosure provides a user authentication system including a user authentication device, a user authentication request device, and a server, wherein the user authentication device is configured to determine whether the user authentication device has entered an identification signal area set based on a location of a user authentication request device, receive an identification signal, based on determining that the user authentication device has entered the identification signal area, determine whether identification information included in the identification signal matches prestored reference information by comparing the identification information with the prestored reference information, and monitor real-time information of the user authentication request device through a server, based on determining that the identification information matches the reference information.

In addition, other methods and other systems for implementing the disclosure and computer-readable recording media storing a computer program for performing the methods may be further provided.

Other aspects, features, and advantages of the disclosure will become better understood through the accompanying drawings, the appended claims, and the detailed description.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a schematic diagram of a user authentication system according to an embodiment;
FIG. 2 is a conceptual diagram illustrating an example in which a user performs user authentication in a user authentication system according to an embodiment;
FIG. 3 is a conceptual diagram illustrating an example in which a user accesses a user authentication request device and a user authentication device monitors real-time information of the user authentication request device, according to an embodiment;
FIG. 4 is a flowchart of a method, performed by a user authentication device, of monitoring real-time information of a user authentication request device, according to an embodiment;
FIG. 5 is a flowchart of a method, performed by a user authentication device, of monitoring real-time information of a user authentication request device, according to another embodiment;
FIG. 6 is a flowchart of a method, performed by a user authentication device, of monitoring real-time information of a user authentication request device, according to another embodiment;
FIG. 7 is a flowchart of a method of setting a state of an identification signal scanning function of a user authentication device, according to an embodiment;
FIG. 8 is a flowchart of a method of setting a state of an identification signal scanning function of a user authentication device, according to another embodiment;
FIG. 9 is a flowchart of a method of setting a state of an identification signal scanning function of a user authentication device, according to another embodiment;
FIG. 10 is a flowchart of a user authentication method according to an embodiment;
FIG. 11 is a flowchart of a user authentication method according to another embodiment;
FIG. 12 is a flowchart of a user authentication method according to another embodiment;
FIG. 13 is a flowchart of a user authentication method according to another embodiment;
FIG. 14 is a flowchart of a method, performed by a user authentication device, of monitoring real-time information of a user authentication request device, according to an embodiment;
FIG. 15 is a flowchart of a user authentication method performed by a user authentication device, according to an embodiment; and
FIG. 16 is a block diagram of a device according to an embodiment.

### DETAILED DESCRIPTION

The advantages and features of the disclosure, and methods of achieving them will be clarified with reference to embodiments described below in detail with reference to the accompanying drawings. However, the disclosure is not limited to the embodiments presented below and may be implemented in various different forms. Rather, it will be understood that the disclosure includes all modifications, equivalents, and substitutes falling within the concept and technical scope of the disclosure. The embodiments presented below are provided so that the disclosure will be thorough and complete and will fully convey the concept of the disclosure to those of ordinary skill in the art. In describing the disclosure, when the detailed description of the relevant known technology is determined to obscure the gist of the disclosure, the detailed description thereof may be omitted.

The terms as used herein are only used to describe particular embodiments and are not intended to limit the disclosure. The singular forms as used herein are intended to include the plural forms as well unless the context clearly indicates otherwise. The terms "comprise," "include," or "have" as used herein are inclusive and therefore specify the presence of one or more stated features, integers, steps, operations, elements, components, or any combination thereof, but do not preclude the presence or addition of one or more other features, integers, steps, operations, elements, components, or any combination thereof.

Some embodiments of the disclosure may be represented by functional block configurations and various processing steps. Some or all of such functional blocks may be implemented in any number of hardware and/or software configurations which perform specific functions. For example, the functional blocks of the disclosure may be implemented by one or more microprocessors or may be implemented by circuitry configurations for certain functions. In addition, for example, the functional blocks of the disclosure may be implemented in various programming or scripting languages. The functional blocks may be implemented as algorithms to be executed by one or more processors. In addition, the disclosure may employ conventional technologies for electronic environment setting, signal processing, and/or data processing. The terms such as "mechanism," "element," "means," and "configuration" may be used broadly and are not limited to mechanical and physical configurations.

In addition, connecting lines or connecting members illustrated in the drawings are intended to represent functional connections and/or physical or circuit connections. In an actual device, connecting lines or connecting members illustrated in the drawings may represent connections between components by means of a variety of functional, physical, or circuit connections which may be substituted or added.

The term "user authentication system" as used herein may refer to a system which may be provided for compliance with security of a specific procedure allowing access only to an authorized user. In the disclosure, a user may use or access a user authentication system through a user authentication device. In order to enable the user to use or access the user authentication system of the disclosure, a user authentication solution such as a user authentication application may be provided to the user, and the provided user authentication solution may be installed on the user authentication device.

The term "biometric data" as used herein may refer to data related to the body of the user or data related to products generated by the user using the user's own body, which may be used to identify the user. In the disclosure, the biometric data may be any type of biometric data. For example, the biometric data may be any one of various types of biometric data among a user's fingerprint, pupil, iris, retina, face, voice, vein, deoxyribonucleic acid (DNA), signature, handwriting, blinking pattern, skeletal structure, ear shape, palm pattern, body temperature pattern, gait pattern, heart rate pattern, electrocardiogram pattern, lip shape and movement, tongue shape and movement, brainwave pattern, finger joint shape, skin pattern and texture, kinetic signature, neural network pattern, muscle pattern, blood flow pattern, tear composition, respiration pattern, and facial blood flow pattern, or may be any combination of two or more types of biometric data.

The term "authentication means biometric data" as used herein may refer to biometric data serving as a user authentication means, and may refer to biometric data collected for user authentication. That is, the authentication means biometric data may be biometric data, of which the input or collection is permitted for user authentication by the user attempting user authentication, and may be used to indicate data collected by a specific device. The user attempting user authentication may allow the input or collection of the authentication means biometric data for access to a restricted procedure through user authentication. The type of authentication means biometric data may be preset to be used by a user or a system to perform user authentication.

The term "registered biometric data" as used herein may refer to biometric data which the user has registered or stored in a device owned by the user, that is, the user authentication device. The registered biometric data may be data serving as a criterion for determining whether the authentication means biometric data matches data of the user attempting user authentication. The type of registered biometric data may be the same as the type of authentication means biometric data. When the authentication means biometric data matches the registered biometric data, user authentication may be successfully performed, and access to a restricted procedure may be authorized.

In an embodiment, the registered biometric data may be collected through the user authentication device, a part of the user authentication device, or a device electrically or communicatively connected to the user authentication device, and may be stored in the user authentication device. For example, the user may store the registered biometric data in the user authentication device by inputting and storing the user's biometric data through a data input device provided in the user authentication device, such as a camera or a fingerprint input device.

In another embodiment, the registered biometric data may be collected through a user authentication request device and stored in a user authentication device. Specifically, the registered biometric data may be collected through the user authentication request device, transmitted to the user authentication device (or to the user authentication device through a server), and stored in the user authentication device. The registered biometric data stored through this procedure may also be used thereafter to perform the user authentication procedure in the system of the disclosure. For example, for initial authentication for use of the user authentication system, the user authentication device may collect data as the "registered biometric data" of the user. Thereafter, when the user attempts user authentication for use of the user authentication system, the user authentication device may collect data as the "authentication means biometric data" of the user. Even when the types of registered biometric data are the same (for example, facial data), the specifications of sensors which collect data may differ from device to device. Therefore, according to an embodiment, the accuracy of identity verification between the registered biometric data and the authentication means biometric data may be improved.

In another embodiment, the registered biometric data may be divided and stored in a plurality of user authentication devices. Specifically, the registered biometric data may be divided into a plurality of pieces of sub-registered biometric data and respectively stored in different user authentication devices.

In an embodiment, a user verification procedure may be performed in order for the registered biometric data to be stored in the user authentication device. The user verification procedure is a procedure which should be accompanied in order to use the user authentication system of the disclosure and access the user authentication system of the disclosure, and may be understood as a type of service subscription procedure. In an embodiment, only a user who has performed the user verification procedure may store registered biometric data in the user's terminal, or only a terminal of a user for whom the user verification procedure has been performed may store registered biometric data.

In an embodiment, the user verification procedure may include an identity card verification procedure.

In an embodiment, the identity card verification procedure may include an identity card authenticity verification procedure. The identity card authenticity verification procedure may be a procedure for verifying whether an identity card possessed by a user is a forged identity card. The identity card authenticity verification procedure may be performed by capturing an image of the identity card by using a camera or a sensor of a user terminal. For example, the image capture of the identity card and the identity card authenticity verification procedure may be performed through a user authentication solution such as a user authentication application.

In an embodiment, the identity card verification procedure may include an identity card comparison procedure. The identity card comparison procedure may be a procedure for verifying whether an identity card possessed by a user is the user's identity card. The identity card comparison procedure may be performed through image capture of a user's face by using a camera or a sensor of a user terminal. For example, the image capture of the user's face and the identity card comparison procedure may be performed through a user authentication solution such as a user authentication application.

Hereinafter, a user authentication method of the disclosure is described.

A user authentication system of the disclosure may be based on various authentication methods according to an entity which determines whether biometric data match each other.

First, the user authentication system of the disclosure may be based on a user terminal authentication method (or a user authentication device authentication method). The user terminal authentication method may refer to a method in which whether authentication means biometric data matches registered biometric data is determined by a user terminal, that is, a user authentication device. The user terminal may determine whether the authentication means biometric data received from another device matches the registered biometric data stored in the user terminal by comparing the registered biometric data with the authentication means biometric data. The other device may be any one of a user authentication request device, a server, and a third device. The user terminal may transmit a comparison result value to another device (which may be the same device as the "other device" described above), and the device having received the comparison result value may permit or deny access to a restricted procedure, based on the comparison result value. Furthermore, instead of transmitting the comparison result value to another device, the user terminal may directly permit or deny access to the restricted procedure, based on the comparison result value.

Next, the user authentication system of the disclosure may be based on a user authentication request device authentication method. The user authentication request device authentication method may refer to a method in which whether authentication means biometric data matches registered biometric data is determined by the user authentication request device. The user authentication request device may determine whether the authentication means biometric data, which is collected through the user authentication request device, a part of the user authentication request device, or a device electrically or communicatively connected to the user authentication request device, matches the registered biometric data received from another device by comparing the authentication means biometric data with the registered biometric data. The other device may be any one of a user terminal (i.e., the user authentication device), a server, and a third device. The user authentication request device may permit or deny access to the restricted procedure, based on the comparison result value, or may transmit the comparison result value to another device (which may be the same device as the "other device" described above), and the device having received the comparison result value may permit or deny access to the restricted procedure, based on the comparison result value. Furthermore, instead of transmitting the comparison result value to another device, the user authentication request device may directly permit or deny access to the restricted procedure, based on the comparison result value.

Next, the user authentication system of the disclosure may be based on a server authentication method. The server authentication method may refer to a method in which whether authentication means biometric data matches registered biometric data is determined by a server. The server may determine whether the authentication means biometric data received from the user authentication request device matches the registered biometric data received from the user terminal (that is, the user authentication device) by comparing the authentication means biometric data with the registered biometric data. The server may permit or deny access to the restricted procedure, based on the comparison result value, or transmit the comparison result value to another device, and the device having received the comparison result value may permit or deny access to the restricted procedure, based on the comparison result value. Furthermore, instead of transmitting the comparison result value to another device, the server may directly permit or deny access to the restricted procedure, based on the comparison result value.

In an embodiment, in the server authentication method, the user authentication device may transmit the registered biometric data to the server, based on recognizing that the user accesses the user authentication request device. In an embodiment, the user authentication device may recognize that the user accesses the user authentication request device by receiving a signal broadcast by the user authentication request device. The signal broadcast by the user authentication request device may correspond to a beacon signal, but the disclosure is not limited thereto.

Furthermore, the server may request the user authentication request device to collect the authentication means biometric data, based on receiving the registered biometric data from the user authentication device. The user authentication request device may collect the authentication means biometric data in response to the request for collection of the authentication means biometric data, and may transmit the collected authentication means biometric data to the server. The server may generate a comparison result value by comparing the authentication means biometric data with the registered biometric data. The server may transmit the comparison result value to another device, and may permit or deny access to the restricted procedure, based on the comparison result value.

In addition, the user authentication system of the disclosure may be based on a user authentication-dedicated device authentication method. The user authentication-dedicated device authentication method may refer to a method in which whether authentication means biometric data matches registered biometric data is determined by a user authentication-dedicated device. The user authentication-dedicated device may be a device provided separately from the user terminal (or the user authentication device) or the user authentication request device, and may be a device provided individually to perform user authentication without performing other functions. The user authentication-dedicated device may receive and store the registered biometric data from the user terminal, and may determine whether the authentication means biometric data matches the registered biometric data by comparing the subsequently received authentication means biometric data with the registered biometric data. The user authentication-dedicated device may transmit a comparison result value to another device, and the other device having received the comparison result value may permit or deny access to the restricted procedure, based on the comparison result value. The other device may be any one of a user terminal, a user authentication request device, a server, and a third device.

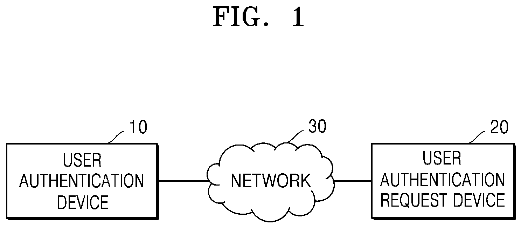

FIG. 1 is a schematic diagram of a user authentication system according to an embodiment.

The user authentication system of the disclosure may include a user authentication device 10 and a user authentication request device 20.

In the disclosure, the user authentication device 10 may refer to a device owned by a user who performs user authentication. The user authentication device 10 may be understood as a user terminal. The user terminal may include any type of device capable of storing registered biometric data and/or determining whether biometric data match each other through comparison of biometric data. For example, the user authentication device 10 may be a smartphone, a mobile phone, a tablet personal computer (PC), a PC, a personal digital assistant (PDA), a laptop, a media player, a global positioning system (GPS) device, smart glasses, a smart watch, a device on which an input/output interface such as a camera is mounted, and other mobile or non-mobile electronic devices, but the disclosure is not limited thereto.

In the disclosure, the user authentication request device 20 may refer to a device which requests performance of user authentication. The user authentication request device 20 may detect a user (physically or electronically) accessing the user authentication request device 20. The user authentication request device 20 may collect authentication means biometric data from the user. The user authentication request device 20 may transmit the authentication means biometric data to another device or determine whether biometric data match each other through comparison of biometric data. For example, the user authentication request device 20 may be a smartphone, a mobile phone, a tablet PC, a PC, a PDA, a laptop, a media player, a GPS device, smart glasses, a smart watch, a wearable device having a communication function and a data processing function, such as a hair band or a ring, a camera, a device on which an input/output interface is mounted, such as a robot including a location moving means, and other mobile or non-mobile electronic devices, but the disclosure is not limited thereto.

In the disclosure, the user authentication system may be used to permit access to a restricted procedure only to a user who has successfully completed user authentication, and the application of the user authentication system, that is, the procedure restricted by the user authentication system, may be any procedure requiring security compliance.

For example, when the procedure restricted by the user authentication system is "payment," mobile payment may be automatically approved for a user who has successfully completed user authentication. For example, when the procedure restricted by the user authentication system is "access control," access may be permitted such that an access control gate is opened for a user who has successfully completed user authentication. For example, when the procedure restricted by the user authentication system is "vehicle control," vehicle control may be permitted such that only a user who has successfully completed user authentication is permitted to start a vehicle. For example, when the procedure restricted by the user authentication system is "product purchase from a vending machine," product purchase may be permitted such that only a user who has successfully completed user authentication is permitted to select a product from the vending machine. For example, when the procedure restricted by the user authentication system is "movement to a destination," only a user who has successfully completed user authentication may be permitted to move to the destination through a transportation means on which the user is onboard. For example, when the procedure restricted by the user authentication system is "guidance to a destination," guidance to a destination may be permitted such that only a user who has successfully completed user authentication is guided to a consultation room through the user authentication request device 20. In addition to the above-described examples, the user authentication system of the disclosure may be applied to any procedure requiring security compliance.

In the disclosure, the user authentication request device 20 may be implemented as an electronic kiosk to induce user authentication for access to a restricted procedure through interaction with a user. Accordingly, the user authentication request device 20 may be implemented in various forms depending on the application of the user authentication system, that is, the place of use.

For example, when the procedure restricted by the user authentication system is "payment," the user authentication request device 20 may be implemented in the form of a point of sales (POS) terminal. For example, when the procedure restricted by the user authentication system is "access control," the user authentication request device 20 may be implemented in the form of an access control gate or an electronic device provided together with the access control gate. For example, when the procedure restricted by the user authentication system is "vehicle control" or "movement to a destination," the user authentication request device 20 may be implemented in the form of an on-board computer mounted on a vehicle. For example, when the procedure restricted by the user authentication system is "product purchase from a vending machine," the user authentication request device 20 may be implemented in the form of a vending machine. For example, when the procedure restricted by the user authentication system is "guidance to a destination," the user authentication request device 20 may be implemented in the form of a robot including a location moving means.

In the user authentication system of the disclosure, each of the user authentication device 10 and the user authentication request device 20 may transmit and receive data through the network 30. The network 30 may be implemented as a wired network, such as a local area network (LAN), a wide area network (WAN), or a value added network (VAN), or as a wireless network, such as a mobile radio communication network, a near field communication network, or a satellite communication network. Furthermore, the network 30 may be a comprehensive data communication network which enables the respective network entities illustrated in FIG. 1 to smoothly communicate with each other, and may include any type of wired Internet, wireless Internet, and mobile wireless communication network.

Although not shown in FIG. 1, the user authentication system may include a server. The server may control the overall operation of the user authentication system, and the user authentication system may further include the server for reasons such as ease of data storage, data distribution, design limitations, ease of design, and the like. In an embodiment, the user authentication device 10 or the user authentication request device 20 may transmit and receive all or part of data through the server rather than directly between each other. Specifically, the server may receive, from the user authentication request device 20, biometric data generated through the user authentication request device 20 and transmit the received biometric data to the user authentication device 10. Furthermore, the server may receive, from the user authentication device 10, a user authentication result value generated through the user authentication device 10 and transmit the received user authentication result value to the user authentication request device 20.

In an embodiment, the server may encrypt or decrypt information received from the user authentication device 10 or the user authentication request device 20 by using a preset encryption method or a preset decryption method. Furthermore, the server may transmit the encrypted or decrypted information to the user authentication device 10 or the user authentication request device 20. The encryption/decryption processes may be performed by the user authentication device 10 or the user authentication request device 20 rather than the server.

In an embodiment, the server may include a database (DB) storing identification information of the user who is permitted to access the user authentication system. Specifically, the server may store identification information of a user who possesses the user authentication device 10 on which a preset application is installed. The identification information may refer to information used to identify the user authentication device rather than the user's biometric information. For example, the identification information may include at least one of a telephone number, a membership number, or a resident registration number.

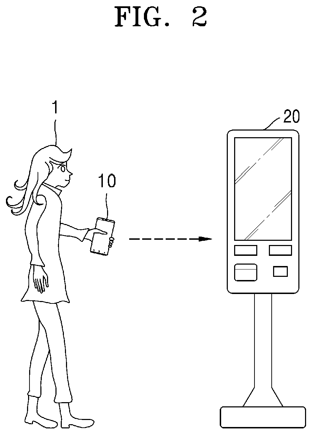

FIG. 2 is a conceptual diagram illustrating an example in which a user performs user authentication in a user authentication system according to an embodiment.

For convenience, the example illustrated in FIG. 2 is described as an example in which the procedure restricted by the user authentication system is "access control," but the disclosure is not limited thereto.

Referring to FIG. 2, a user 1 may possess a user authentication device 10. The user authentication device 10 may store registered biometric data.

The user 1 may access a user authentication request device 20. For example, the user 1 may access the user authentication request device 20 in order to release the blocking of an access control gate and pass through the access control gate.

The user authentication request device 20 may detect the access of the user 1. For example, the user authentication request device 20 may detect the access of the user 1 through a camera or a sensor mounted on or connected to the user authentication request device 20. For example, the user authentication request device 20 may detect the access of the user 1 by transmitting a specific signal or data (e.g., an authentication signal to be described below).

The user authentication request device 20 which has detected the access of the user 1 may collect authentication means biometric data of the user 1. The user 1 may input biometric data of the user 1 through a camera, a sensor, or other input/output interface mounted on or connected to the user authentication request device 20.

When the user authentication system is based on a user terminal authentication method, the user authentication request device 20 may transmit the collected authentication means biometric data to the user authentication device 10. The user authentication device 10 having received the authentication means biometric data may compare the received authentication means biometric data with stored registered biometric data. The user authentication device 10 may generate a comparison result value.

In an embodiment, the user authentication device 10 may compare the received authentication means biometric data with the stored registered biometric data by using a machine learning model prestored in the user authentication device 10. The machine learning model may generate a comparison result value by comparing the received authentication means biometric data with the stored registered biometric data. The machine learning model may refer to a model having problem-solving capabilities and trained such that nodes, which are artificial neurons forming a network through a combination of synapses as in a biological neural network, repeatedly adjust weights of the synapses so as to reduce an error between a correct output corresponding to a specific input and an inferred output.

When the user authentication system is based on a user authentication request device authentication method, the user authentication request device 20 may receive registered biometric data from the user authentication device 10. The user authentication request device 20 may transmit, to the user authentication device 10, a signal requesting the registered biometric data. The user authentication device 10 having received the signal requesting the registered biometric data may transmit the registered biometric data to the user authentication request device 20. The user authentication request device 20 having received the registered biometric data may compare the received registered biometric data with the collected authentication means biometric data. The user authentication request device 20 may generate a comparison result value.

In the example of FIG. 2, whether the user 1 is permitted to enter may be determined according to the generated comparison result value. For example, when the generated comparison result value indicates that the two pieces of biometric data match each other, the blocking of the access control gate for the user 1 may be released. For example, when the generated comparison result value indicates that the two pieces of biometric data do not match each other, the blocking of the access control gate for the user 1 may be maintained.

After user authentication is performed through the user authentication system, the authentication means biometric data used for performing user authentication may be deleted. In an embodiment, the user authentication device 10 may delete the authentication means biometric data used for generating a user authentication result value immediately after the generation of the user authentication result value. In another embodiment, the user authentication request device 20 may delete the authentication means biometric data collected according to the reception of the user authentication request signal immediately after the reception of the user authentication result value from the user authentication device 10.

The user authentication system may require an additional authentication procedure in addition to the user authentication through the biometric data. When security is required, for example, when the security level of a zone the user intends to access is higher than that of other regions, or when the amount of payment intended by the user exceeds a preset amount, the user authentication system may require an additional authentication procedure from the user. In an embodiment, the additional authentication procedure may be required only when the registered biometric data matches the authentication means biometric data.

In an embodiment, the additional authentication procedure may include an identity card comparison procedure. The identity card comparison procedure may be a procedure for verifying whether an identity card possessed by a user is the user's identity card. The identity card comparison procedure may include capturing an image of the identity card, capturing an image of the user's face, and comparing the image of the identity card with the image of the user's face through a camera or a sensor of the user authentication device 10 or the user authentication request device 20.

In the user authentication system, a method of specifying the user authentication device 10 may be an issue. That is, how to specify a target to which the user authentication request device 20 transmits the collected authentication means biometric data or requests transmission of the registered biometric data may be an issue.

In an embodiment, the user authentication request device 20 may specify the user authentication device 10, based on identification information input by the user 1. In an embodiment, the user authentication request device 20 may include an interface which allows the user 1 to input device identification data, and may receive the device identification data input by the user 1 through the interface. The device identification data may be data used to identify the user terminal, i.e., the user authentication device 10. For example, the device identification data may include at least one of a telephone number, a membership number, or a resident registration number.

In another embodiment, the user authentication request device 20 may specify the user authentication device 10 by detecting a nearest device. In an embodiment, the user authentication request device 20 may detect the nearest device by using any suitable method. For example, the user authentication request device 20 may include a plurality of nodes or channels, and may measure a distance, based on signals transmitted and received between the plurality of nodes or channels and the user authentication device 10. For example, the plurality of nodes or channels may be nodes or channels for transmitting and receiving beacon signals.

In another embodiment, the user authentication request device 20 may specify the user authentication device 10, based on a prearranged sound signal. In an embodiment, the prearranged sound signal may refer to a sound signal which is detectable by the user authentication device 10 in the user authentication system. The user authentication device 10 may detect the sound signal and determine whether the detected sound signal is the prearranged sound signal transmitted by the user authentication request device 20. When the user authentication device 10 determines that the detected sound signal is the prearranged sound signal, the user authentication device 10 may transmit device identification data of the user authentication device 10 to the user authentication request device 20 or a server. The user authentication request device 20 may specify the user authentication device 10, based on the device identification data.

In another embodiment, the user authentication request device 20 may specify the user authentication device 10, based on user identification data received from the server. Specifically, the user authentication request device 20 may transmit the collected authentication means biometric data to the server, and the server may search for user identification data from a DB storing pieces of identification information of a plurality of users, based on the authentication means biometric data. Furthermore, the server may transmit the retrieved user identification data to the user authentication request device 20, and the user authentication request device 20 may specify the user authentication device 10, based on the obtained user identification data.

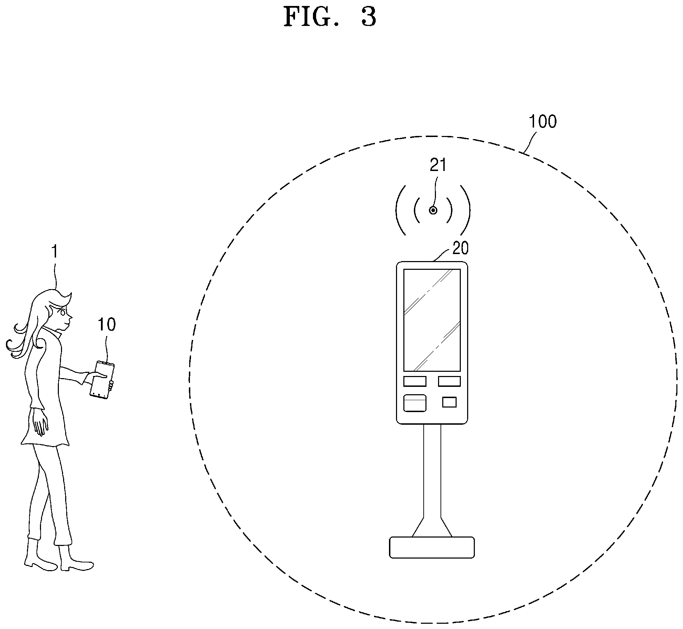

FIG. 3 is a conceptual diagram illustrating an example in which a user accesses a user authentication request device and a user authentication device monitors real-time information of the user authentication request device, according to an embodiment.

Referring to FIG. 3, the user authentication system may include a user authentication device 10, a user authentication request device 20, and a server (not shown).

A user 1 may access the user authentication request device 20 to perform user authentication, while carrying the user authentication device 10. Specifically, the user 1 may enter an identification signal area 100 of the user authentication request device 20, while carrying the user authentication device 10.

In an embodiment, the identification signal area 100 may refer to an area in which an identification signal 21 broadcast by the user authentication request device 20 may be received. In an embodiment, the identification signal 21 may refer to a beacon signal. In an embodiment, the identification signal 21 may refer to an AltBeacon signal.

In an embodiment, the identification signal area 100 may be set based on a location of the user authentication request device 20. Furthermore, the identification signal area 100 may be set based on at least one of a type or an intensity of the broadcast identification signal 21.

The user authentication device 10 may determine whether the user authentication device 10 has entered the identification signal area 100.

In an embodiment, the user authentication device 10 may determine whether the user authentication device 10 has entered the identification signal area 100, based on at least one of a current location of the user authentication device 10 or a Bluetooth signal.

The user authentication device 10 may receive the identification signal 21 broadcast by the user authentication request device 20, based on determining that the user authentication device 10 has entered the identification signal area 100.

In an embodiment, the user authentication device 10 may receive the identification signal 21 broadcast from the user authentication request device 20 by using an identification signal scanning function of the user authentication device 10. For example, the user authentication device 10 may receive the identification signal 21, based on the identification signal scanning function of the user authentication device 10 being in an on state. When the identification signal scanning function of the user authentication device 10 is in an off state, the user authentication device 10 may not receive the identification signal 21.

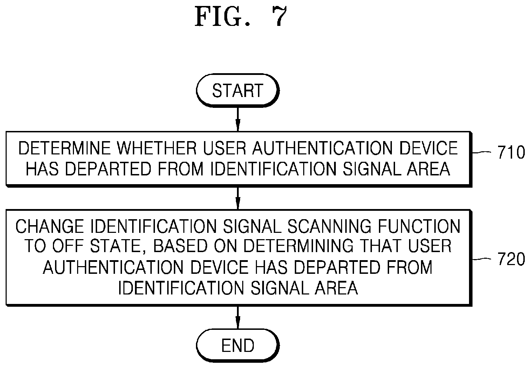

The user authentication device 10 may change the state (the on state and the off state) of the identification signal scanning function so as to efficiently scan the identification signal 21 and accurately receive the broadcast identification signal 21. A method of changing the state of the identification signal scanning function of the user authentication device 10 is described in detail below with reference to FIGS. 7 to 9.

The user authentication device 10 may determine whether identification information included in the identification signal 21 matches reference information prestored in the user authentication device 10 by comparing the identification information with the reference information, based on receiving the identification signal 21.

The user authentication device 10 may monitor real-time information of the user authentication request device 20 through the server, based on determining that the identification information matches the reference information.

In an embodiment, the server may reflect real-time information of each of user authentication request devices capable of performing user authentication. Specifically, the server may reflect and store the real-time information of the user authentication request device 20 broadcasting the identification signal 21. The real-time information may refer to any information stored and generated by the user authentication request device 20.

In an embodiment, the server which reflects the real-time information of the user authentication request device 20 may correspond to a real-time database (RTDB) server, but the disclosure is not limited thereto.

In an embodiment, the real-time information of the user authentication request device 20, which is stored in the server, may include authentication means data generated by the user authentication request device 20 and a value of an authentication object identifier (OID), but the disclosure is not limited thereto.

The user authentication device 10 may monitor the broadcast identification signal 21 by using the identification signal scanning function, and may determine whether the user authentication device 10 has entered the identification signal area 100. When the user authentication device 10 has entered the identification signal area 100, the user authentication device 10 may perform a user authentication procedure, even when a user authentication application installed on the user authentication device 10 is in an off state, by monitoring the real-time information of the user authentication request device 20 through comparison of the identification information and the reference information.

The user authentication request device 20 may receive authentication means data for user authentication from the user 1. The authentication means data may refer to any type of information usable for user authentication. In an embodiment, the authentication means data may correspond to various types of biometric data, such as facial information, fingerprint information, pupil information, or arterial information. In another embodiment, the authentication means data may refer to data uniquely assigned to the user 1, such as a mobile phone number, a resident registration number, or an email address.

In an embodiment, the user authentication request device 20 may collect biometric data of the user 1 as the authentication means data by using a sensor included in the user authentication request device 20.

In an embodiment, the user authentication request device 20 may detect the access of the user authentication device 10. The user authentication request device 20 may detect the access of a user terminal by using any suitable method. The user authentication request device 20 may collect the authentication means data, based on detecting the access of the user authentication device 10.

The user authentication request device 20 may request the server to issue an authentication OID, based on receiving the authentication means data from the user 1. The authentication OID may refer to a unique identifier issued to perform a preset function according to user authentication for the user 1. Specifically, the authentication OID may refer to a transaction OID, that is, an identifier issued for a transaction to be performed after the user 1 has successfully completed user authentication.

The server may approve the issuance of the authentication OID and issue the authentication OID in response to a request for the issuance of the authentication OID from the user authentication request device 20. Furthermore, the server may transmit the issued authentication OID to the user authentication request device 20.

The user authentication request device 20 may transmit, back to the server, the authentication OID and the authentication means data received from the server. Thereafter, the server may store information about the authentication OID. Furthermore, the user authentication request device 20 may monitor a value of the authentication OID stored in the server.

Because the user authentication device 10 monitors the real-time information of the user authentication request device 20, the user authentication device 10 may obtain, from the server, the authentication means data and the authentication OID transmitted to the server by the user authentication request device 20.

The user authentication device 10 may generate an authentication result value by comparing the authentication means data obtained from the server with registration data prestored in the user authentication device 10. In an embodiment, the authentication result value may indicate whether the authentication means data matches the registration data. The authentication means data and the registration data may correspond to the same type of data.

The user authentication device 10 may set the value of the authentication OID to be stored in the server, based on the authentication result value.

In an embodiment, the user authentication device 10 may set the value of the authentication OID to be stored in the server to "TRUE," indicating successful user authentication, based on the authentication result value indicating that the authentication means data matches the registration data. In another embodiment, the user authentication device 10 may set the value of the authentication OID to be stored in the server to "FALSE," indicating failed user authentication, based on the authentication result value indicating that the authentication means data does not match the registration data.

In an embodiment, an initial value of the authentication OID may be set to "FALSE," indicating failed user authentication. When the authentication result value indicates that the authentication means data matches the registration data, the user authentication device 10 may change the value of the authentication OID to be stored in the server to "TRUE," indicating successful user authentication.

In an embodiment, the server may perform a preset function, based on the value of the authentication OID being "TRUE," indicating successful user authentication.

In an embodiment, the server may control the user authentication request device 20 to perform the preset function. In another embodiment, the server may control a device for performing the preset function (e.g., a speed gate) to perform the preset function. In another embodiment, the server may perform payment processing through a payment server, or may record a check-in or check-out time of the user 1.

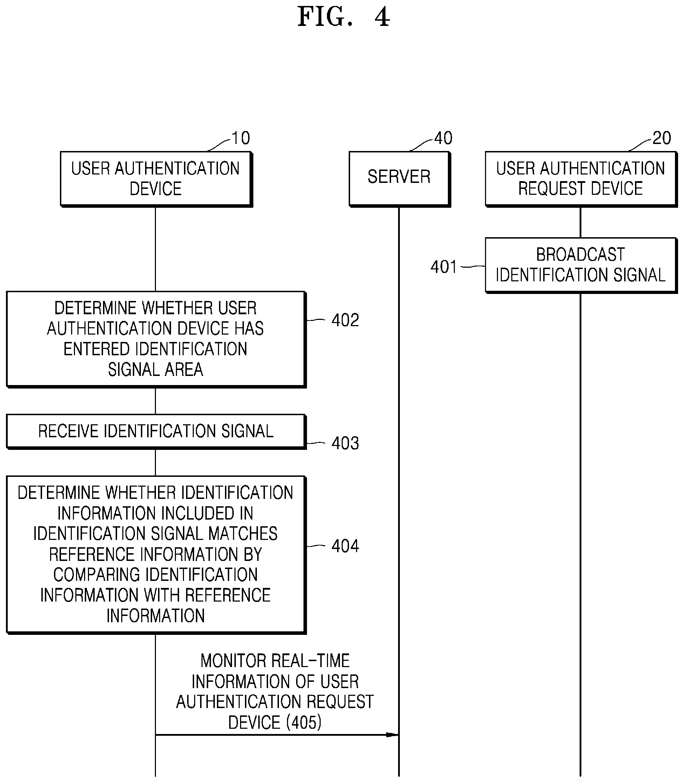

FIG. 4 is a flowchart of a method, performed by a user authentication device 10, of monitoring real-time information of a user authentication request device 20, according to an embodiment.

The user authentication device 10 may monitor real-time information of the user authentication request device 20 through a server 40, based on receiving an identification signal broadcast by the user authentication request device 20. The user authentication device 10 may obtain authentication means data for user authentication, which is input to the user authentication request device 20, through monitoring of the user authentication request device 20, and may perform user authentication by using the authentication means data. Accordingly, the user authentication system may prevent waste of communication resources caused when the user authentication request device 20 transmits the authentication means data to all user authentication devices located therearound. Hereinafter, the method of monitoring the real-time information of the user authentication request device 20 is described in detail with reference to FIG. 4.

In an embodiment, in operation 401, the user authentication request device 20 may broadcast an identification signal. The identification signal may refer to a wireless communication-based signal, such as a beacon signal, capable of identifying the user authentication request device 20.

In an embodiment, in operation 402, the user authentication device 10 may determine whether the user authentication device 10 has entered the identification signal area 100. In an embodiment, the user authentication device 10 may determine whether the user authentication device 10 has entered the identification signal area 100, based on at least one of a real-time location or a Bluetooth signal.

In an embodiment, the user authentication device 10 may determine whether the user authentication device 10 has entered the identification signal area 100, based on a current location of the user authentication device 10. Specifically, the user authentication device 10 may determine whether the current location of the user authentication device 10 is included within the identification signal area 100 of the user authentication request device 20, based on a location detection function of the user authentication device 10.

In an embodiment, the user authentication device 10 may update the current location of the user authentication device 10 at predefined time intervals.

In another embodiment, the user authentication device 10 may determine whether the user authentication device 10 has entered the identification signal area 100, based on a Bluetooth signal. Specifically, the user authentication device 10 may transmit a first Bluetooth signal. Furthermore, the user authentication request device 20 may transmit a second Bluetooth signal. When the first Bluetooth signal transmitted by the user authentication device 10 and the second Bluetooth signal transmitted by the user authentication request device 20 communicate with each other, the user authentication device 10 may determine that the user authentication device 10 has entered the identification signal area 100.

In another embodiment, the user authentication device 10 may determine whether the user authentication device 10 has entered the identification signal area 100, based on activation of a user authentication application installed on the user authentication device 10.

In another embodiment, the user authentication device 10 may determine whether the user authentication device 10 has entered the identification signal area 100, based on activation of the user authentication device 10 itself. For example, the user authentication device 10 may be activated when a screen in an off state is turned on by a user operation or reception of a notification.

In an embodiment, in operation 403, the user authentication device 10 may receive an identification signal broadcast by the user authentication request device 20, based on determining that the user authentication device 10 has entered the identification signal area 100. When the user authentication device 10 has not entered the identification signal area 100, the user authentication device 10 may not receive the identification signal.

In an embodiment, the user authentication device 10 may receive the identification signal by using an identification signal scanning function of the user authentication device 10. Specifically, the user authentication device 10 may receive the identification signal only when the identification signal scanning function is in an on state.

In an embodiment, in operation 404, the user authentication device 10 may determine whether identification information included in the identification signal matches prestored reference information by comparing the identification information with the prestored reference information.

Specifically, the identification information may include first identification information, second identification information, and third identification information. In an embodiment, the first identification information may refer to a universally unique identifier (UUID). The UUID is a 16-byte identifier. In an embodiment, the second identification information may refer to a major identifier. The major identifier may refer to an identifier used to distinguish beacon signals having the same UUID. In an embodiment, the third identification information may refer to a minor identifier. The minor identifier may refer to an identifier used to distinguish beacon signals having the same UUID and major identifier.

Furthermore, the reference information may include first reference information, second reference information, and third reference information. In an embodiment, the first reference information may refer to a UUID. The UUID is a 16-byte identifier. In an embodiment, the second reference information may refer to a major identifier. The major identifier may refer to an identifier used to distinguish beacon signals having the same UUID. In an embodiment, the third reference information may refer to a minor identifier. The minor identifier may refer to an identifier used to distinguish beacon signals having the same UUID and major identifier.

In an embodiment, the user authentication device 10 may determine whether the first identification information, the second identification information, and the third identification information match the first reference information, the second reference information, and the third reference information, respectively.

In an embodiment, in operation 405, the user authentication device 10 may monitor real-time information of the user authentication request device 20, based on determining that the identification information matches the reference information. When the identification information does not match the reference information, the user authentication device 10 may not monitor the real-time information of the user authentication request device 20.

In an embodiment, the user authentication device 10 may identify the user authentication request device 20 to be monitored from among the plurality of user authentication request devices stored in the server 40, based on the identification information included in the identification signal.

In an embodiment, the real-time information of the user authentication request device 20 stored in the server 40 may include information input to the user authentication request device 20 and a state of the user authentication request device 20. Specifically, the real-time information of the user authentication request device 20 stored in the server 40 may include the authentication OID and the authentication means data input to the user authentication request device 20, but the disclosure is not limited thereto.

Accordingly, the user authentication device 10 may efficiently and accurately obtain the authentication means data input to the user authentication request device 20 through the server 40, and the user authentication request device 20 may improve communication efficiency by transmitting the input authentication means data only to the server 40, without transmitting the authentication means data to all user authentication devices located therearound.

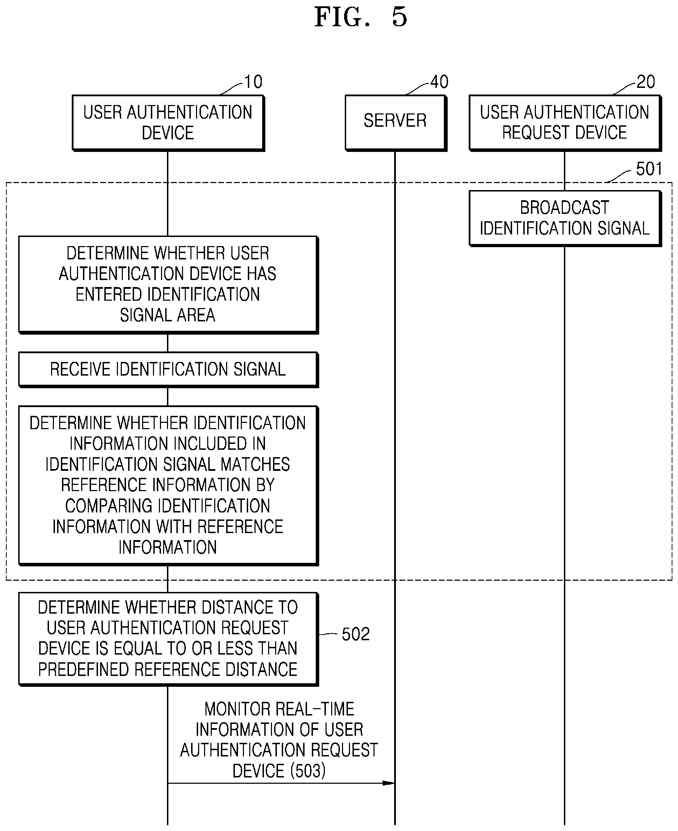

FIG. 5 is a flowchart of a method, performed by a user authentication device 10, of monitoring real-time information of a user authentication request device 20, according to another embodiment.

Descriptions of parts of the embodiments described with reference to FIGS. 3 and 4, which may be equally applied to or analogously applied to the embodiment illustrated in FIG. 5, are omitted.

In an embodiment, in operation 501, the user authentication request device 20 may broadcast an identification signal. Furthermore, the user authentication device 10 may determine whether the user authentication device 10 has entered the identification signal area set based on a location of the user authentication request device 20. Furthermore, the user authentication device 10 may receive the identification signal, based on determining that the user authentication device 10 has entered the identification signal area. Furthermore, the user authentication device 10 may determine whether identification information included in the identification signal matches reference information prestored in the user authentication device 10 by comparing the identification information with the reference information.

In an embodiment, in operation 502, the user authentication device 10 may further determine whether the distance to the user authentication request device 20 is equal to or less than a predefined reference distance, based on determining that the identification information matches the reference information.

Specifically, the user authentication device 10 may calculate the distance between the user authentication device 10 and the user authentication request device 20, based on a strength of the identification signal. Furthermore, the user authentication device 10 may determine whether the distance to the user authentication request device 20 is equal to or less than the predefined reference distance.

In an embodiment, the user authentication device 10 may monitor real-time information of the user authentication request device 20, based on determining that the distance to the user authentication request device 20 is equal to or less than the predefined reference distance. When the distance to the user authentication request device 20 is greater than the predefined reference distance, the user authentication device 10 may not monitor the real-time information of the user authentication request device 20.

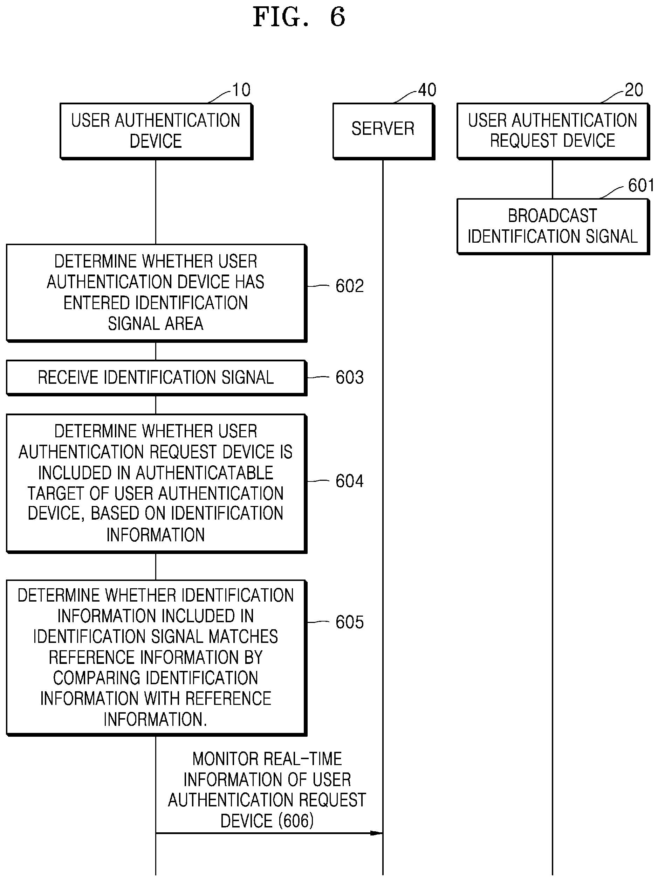

FIG. 6 is a flowchart of a method, performed by a user authentication device 10, of monitoring real-time information of a user authentication request device 20, according to another embodiment.

Descriptions of parts of the embodiments described with reference to FIGS. 3 and 4, which may be equally applied to or analogously applied to the embodiment illustrated in FIG. 6, are omitted.

In an embodiment, in operation 601, the user authentication request device 20 may broadcast an identification signal.

In an embodiment, in operation 602, the user authentication device 10 may determine whether the user authentication device 10 has entered the identification signal area.

In an embodiment, in operation 603, the user authentication device 10 may receive an identification signal, based on determining that the user authentication device 10 has entered the identification signal area.

In an embodiment, in operation 604, the user authentication device 10 may determine whether the user authentication request device 20 is included in an authenticatable target of the user authentication device 10, based on the identification information.

In an embodiment, the authenticatable target may refer to a target for which the user authentication device 10 is capable of performing user authentication by using the authentication means data input to the user authentication request device 20.

In an embodiment, the user authentication device 10 may prestore, in a memory, identification information of at least one user authentication request device included in the authenticatable target. Furthermore, the user authentication device 10 may determine whether the user authentication request device 20 is included in the authenticatable target by comparing the identification information received from the user authentication request device 20 with the prestored identification information of the authenticatable target.

In an embodiment, the user authentication device 10 may store a major identifier of at least one user authentication request device included in the authenticatable target. Furthermore, the user authentication device 10 may compare the major identifier included in the identification information received from the user authentication request device 20 with the major identifier of the at least one user authentication request device included in the authenticatable target. Furthermore, when there exists a major identifier matching the major identifier included in the identification information received from the user authentication request device 20, the user authentication device 10 may determine whether the identification information included in the identification signal matches the reference information by comparing the identification information with the reference information.

In an embodiment, in operation 605, the user authentication device 10 may determine whether identification information included in the identification signal matches reference information by comparing the identification information with the reference information.

In an embodiment, in operation 606, the user authentication device 10 may monitor real-time information of the user authentication request device 20.

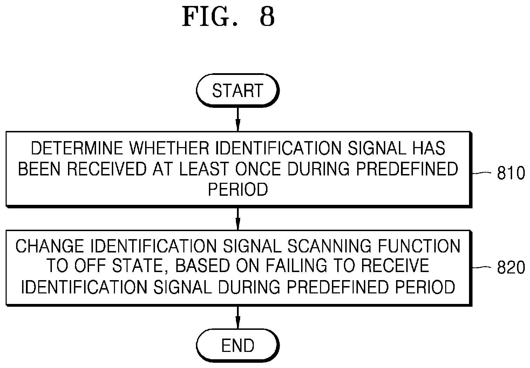

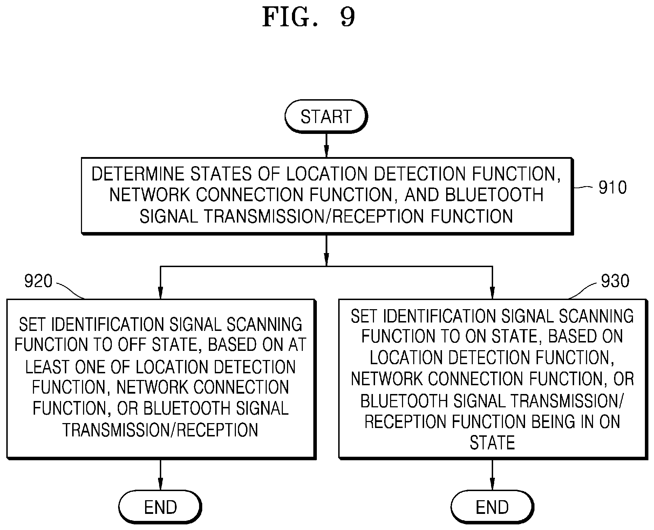

FIG. 7 is a flowchart of a method of setting a state of an identification signal scanning function of a user authentication device, according to an embodiment. FIG. 8 is a flowchart of a method of setting a state of an identification signal scanning function of a user authentication device, according to another embodiment. FIG. 9 is a flowchart of a method of setting a state of an identification signal scanning function of a user authentication device, according to another embodiment.

Referring to FIGS. 7 to 9, a method of setting a state of an identification signal scanning function used by the user authentication device 10 to scan the identification signal 21 is illustrated.

Conventionally, even when the identification signal scanning function of the user authentication device 10 is in an on state, the user authentication device 10 may fail to receive the identification signal 21 broadcast by the user authentication request device 20 due to device errors or communication failures. Furthermore, when the user authentication device 10 performs identification signal scanning for a long period of time, the user authentication device 10 may fail to receive the identification signal during repetitive switching between a foreground state and a background state of a user authentication application installed on the user authentication device 10. Furthermore, the user authentication device 10 may fail to receive the identification signal due to accumulation of an identification signal stack (e.g., a BLE stack) or excessive reception of the identification signal. Furthermore, during repetitive switching of a state of a Bluetooth signal transmission/reception function of the user authentication device 10, a generic attribute profile (GATT) connection may be redundantly registered, thus preventing normal reception of the identification signal.

According to an embodiment, the user authentication device 10 may receive the identification signal broadcast by the user authentication request device 20 without missing the identification signal by appropriately adjusting a state (an on state and an off state) of an identification signal scanning function and an identification signal scanning period. This is described in detail below with reference to FIGS. 7 to 9.

Referring to FIG. 7, the user authentication device 10 may set the state of the identification signal scanning function by determining whether the user authentication device 10 has departed from the identification signal area.

In an embodiment, in operation 710, the user authentication device 10 may determine whether the user authentication device 10 has departed from the identification signal area.

In an embodiment, the user authentication device 10 may determine whether the user authentication device 10 has departed from the identification signal area, based on at least one of a current location of the user authentication device 10 or a Bluetooth signal.

In an embodiment, in operation 720, the user authentication device 10 may change the identification signal scanning function to an off state, based on determining that the user authentication device 10 has departed from the identification signal area.

Specifically, the user authentication device 10 may set the identification signal scanning function to an on state, based on determining that the user authentication device 10 has entered the identification signal area. Furthermore, the user authentication device 10 may change the identification signal scanning function to an off state, based on determining that the user authentication device 10 has departed from the identification signal area.

Accordingly, the user authentication device 10 may improve identification signal scanning accuracy and efficiency by reducing unnecessary identification signal scanning.

Referring to FIG. 8, the user authentication device 10 may set the state of the identification signal scanning function by determining whether the identification signal has been received at least once during a predefined period.

In an embodiment, in operation 810, the user authentication device 10 may determine whether the identification signal has been received at least once during a predefined period.

The identification signal scanning function of the user authentication device 10 may be in an on state.

In an embodiment, the predefined period may be arbitrarily set by a user and may be set differently according to the specifications of the user authentication device 10. In an embodiment, the predefined period may correspond to two minutes, but the disclosure is not limited thereto.

In an embodiment, in operation 820, the user authentication device 10 may change the identification signal scanning function to an off state, based on failing to receive the identification signal during a predefined period.

In an embodiment, after changing the identification signal scanning function to an off state, the user authentication device 10 may immediately change the identification signal scanning function back to the on state and continue to scan the identification signal.

Accordingly, the user authentication device 10 may improve identification signal scanning accuracy and efficiency by resolving device-related or communication-related errors which may occur due to continuously performing identification signal scanning for a long period of time.

Referring to FIG. 9, the user authentication device 10 may set the state of the identification signal scanning function, based on a state of at least one of a location detection function, a network connection function, or a Bluetooth signal transmission/reception function of the user authentication device 10.

In an embodiment, in operation 910, the user authentication device 10 may determine the states of the location detection function, the network connection function, and the Bluetooth signal transmission/reception function. The state of each function may correspond to one of an on state and an off state.

In an embodiment, the location detection function of the user authentication device 10 may refer to a function (e.g., a GPS) capable of detecting a current location of the user authentication device 10. In an embodiment, the network connection function may refer to a function enabling wireless communication such as Wireless Fidelity (Wi-Fi) or cellular data. In an embodiment, the Bluetooth signal transmission/reception function may refer to a function by which the user authentication device 10 transmits a Bluetooth signal to the outside or receives a Bluetooth signal transmitted from the outside.

In an embodiment, in operation 920, the user authentication device 10 may set the identification signal scanning function to an off state, based on at least one of the location detection function, the network connection function, or the Bluetooth signal transmission/reception function being in an off state.

In an embodiment, in operation 930, the user authentication device 10 may set the identification signal scanning function to an on state, based on the location detection function, the network connection function, and the Bluetooth signal transmission/reception function being in an on state.

Accordingly, when at least one of the location detection function, the network connection function, or the Bluetooth signal transmission/reception function, which are required for monitoring real-time information of the user authentication request device 20, is in an off state, the user authentication device 10 may improve identification signal scanning accuracy and efficiency by not performing identification signal scanning.

Although not shown in FIGS. 7 to 9, the user authentication device 10 may set the state of the identification signal scanning function, based on whether to store registration data of the user authentication device 10. Specifically, when the user authentication device 10 stores registration data for user authentication, the user authentication device 10 may basically set the identification signal scanning function to an on state. Furthermore, when the user authentication device 10 does not store registration data, the user authentication device 10 may basically set the identification signal scanning function to an off state.

Although not shown in FIGS. 7 to 9, the user authentication device 10 may continuously perform identification signal scanning, based on the identification signal scanning function being in an on state. Specifically, the user authentication device 10 may continuously perform identification signal scanning rather than discontinuously perform identification signal scanning, such as performing identification signal scanning during a first period and not performing identification signal scanning during a second period.

In an embodiment, the user authentication device 10 may continuously perform identification signal scanning, based on code for continuously performing identification signal scanning.

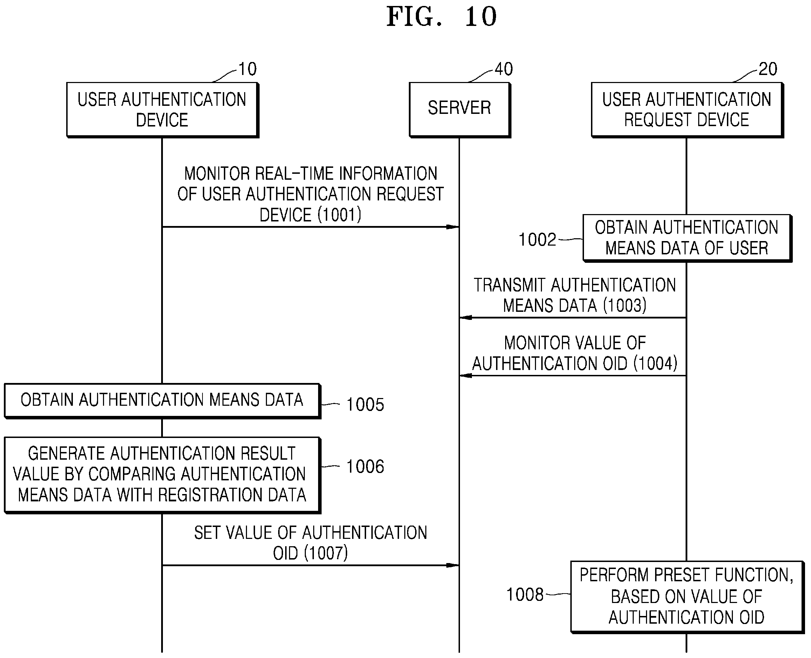

FIG. 10 is a flowchart of a user authentication method according to an embodiment.

Descriptions of parts of the embodiments described with reference to FIGS. 3 and 4, which may be equally applied to or analogously applied to the embodiment illustrated in FIG. 6, are omitted.

In an embodiment, in operation 1001, a user authentication device 10 may monitor real-time information of a user authentication request device 20 through a server 40. A method, performed by the user authentication device 10, of monitoring the real-time information of the user authentication request device 20 may be identical to the monitoring methods described above with reference to FIGS. 3 to 6.

In an embodiment, in operation 1002, the user authentication request device 20 may obtain authentication means data of a user.

In an embodiment, the authentication means data may be any one of various types of biometric data among a user's fingerprint, pupil, iris, retina, face, voice, vein, DNA, signature, handwriting, blinking pattern, skeletal structure, ear shape, palm pattern, body temperature pattern, gait pattern, heart rate pattern, electrocardiogram pattern, lip shape and movement, tongue shape and movement, brainwave pattern, finger joint shape, skin pattern and texture, kinetic signature, neural network pattern, muscle pattern, blood flow pattern, tear composition, respiration pattern, and facial blood flow pattern, or may be any combination of two or more types of biometric data. In an embodiment, the user authentication request device 20 may collect biometric data by detecting the access of the user authentication device 10.

In another embodiment, the authentication means data may refer to any type of data uniquely assigned to the user and capable of distinguishing the user from other users, such as a telephone number, a resident registration number, an address, or an email address of the user.

In an embodiment, in operation 1003, the user authentication request device 20 may transmit the authentication means data to the server 40.

In an embodiment, in operation 1004, the user authentication request device 20 may monitor a value of an authentication OID through the server 40. The authentication OID may refer to a unique identifier issued to perform a preset function according to user authentication for the user. Specifically, the authentication OID may refer to a transaction OID, that is, an identifier issued for a transaction to be performed after successful user authentication of the user.

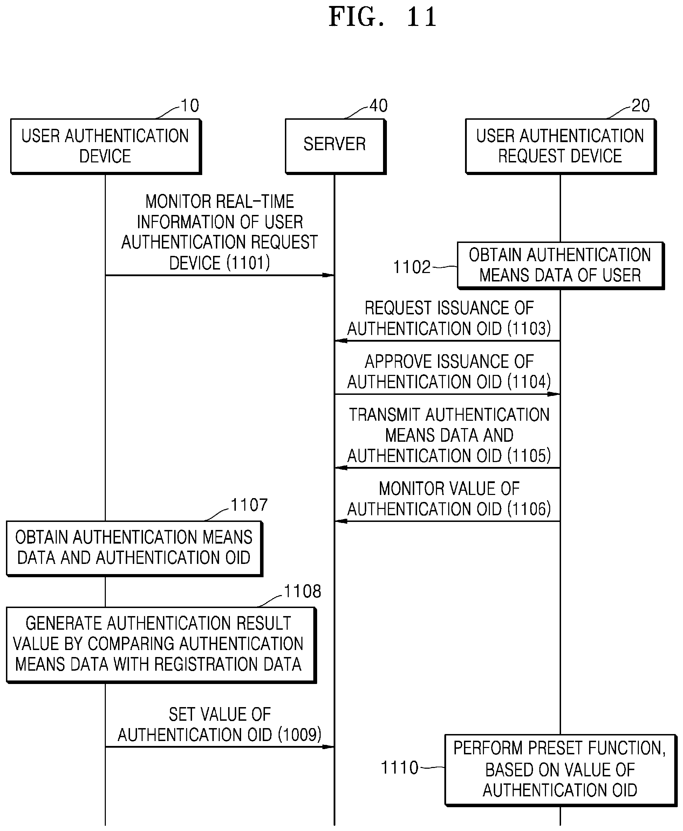

Hereinafter, the method, performed by the user authentication request device 20, of monitoring the authentication OID is described with reference to FIG. 11.

In an embodiment, in operation 1005, the user authentication device 10 may obtain the authentication means data from the server 40.

In an embodiment, because the user authentication device 10 monitors the real-time information of the user authentication request device 20 through the server 40, the user authentication device 10 may obtain the authentication means data which is transmitted to the server 40 by the user authentication request device 20 and stored in the server 40 as the real-time information of the user authentication request device 20.

Specifically, the server 40 may store real-time information of each of a plurality of user authentication request devices 20 capable of performing user authentication. For example, the server 40 may assign unique numbers K01 to K10 to the respective user authentication request devices 20 and may store real-time information of the respective user authentication request devices 20. The server 40 may correspond to an RTDB server 40 capable of immediately reflecting real-time information. The server 40 may store, in the real-time information of K01 of the server 40, the authentication means data received from the user authentication request device 20 corresponding to K01. The user authentication device 10, which has monitored the real-time information of the user authentication request device 20 corresponding to K01 through the server 40, may obtain the authentication means data by retrieving the authentication means data.

In an embodiment, in operation 1006, the user authentication device 10 may generate an authentication result value by comparing the authentication means data with registration data. The authentication means data and the registration data may correspond to the same type of data.

In an embodiment, the authentication result value may indicate whether the authentication means data matches the registration data. For example, the authentication result value may correspond to "1" when the authentication means data matches the registration data, and the authentication result value may correspond to "0" when the authentication means data does not match the registration data.

In an embodiment, in operation 1007, the user authentication device 10 may set a value of an authentication OID. Information about the authentication OID may be stored in the server 40. For example, the real-time information of the user authentication request device 20 corresponding to K01 may include the value of the authentication OID.

In an embodiment, the user authentication device 10 may set the value of the authentication OID stored in the server 40 according to the authentication result value.

Specifically, when the authentication result value indicates that the authentication means data matches the registration data, the user authentication device 10 may set the value of the authentication OID to "TRUE." "TRUE" is a value indicating that user authentication has succeeded, and thus, the server 40 or the user authentication request device 20 is able to perform a preset function.

When the authentication result value indicates that the authentication means data does not match the registration data, the user authentication device 10 may set the value of the authentication OID to "FALSE." "FALSE" is a value indicating that user authentication has failed, and thus, the server 40 or the user authentication request device 20 is unable to perform a preset function.

In an embodiment, in operation 1008, the user authentication request device 20 may perform the preset function, based on the value of the authentication OID.

In an embodiment, because the user authentication request device 20 monitors the value of the authentication OID through the server 40, the user authentication request device 20 may perform the preset function when the value of the authentication OID stored in the server 40 is set to a value indicating that the preset function may be performed.

In an embodiment, the preset function may refer to any function requiring user authentication, such as access permission, check-in and check-out recording, or adult authentication.

FIG. 11 is a flowchart of a user authentication method according to another embodiment.

Descriptions of parts of the embodiments described with reference to FIGS. 3, 4, and 10, which may be equally applied to or analogously applied to the embodiment illustrated in FIG. 11, are omitted.

In an embodiment, in operation 1101, a user authentication device 10 may monitor real-time information of a user authentication request device 20.

In an embodiment, in operation 1102, the user authentication request device 20 may obtain authentication means data of a user.

In an embodiment, in operation 1103, the user authentication request device 20 may request a server 40 to issue an authentication OID, based on obtaining the authentication means data.

In an embodiment, in operation 1104, the server 40 may approve the issuance of the authentication OID.

In an embodiment, while approving the issuance of the authentication OID, the server 40 may directly issue the authentication OID and transmit the issued authentication OID to the user authentication request device 20.

In an embodiment, in operation 1105, the user authentication request device 20 may transmit the authentication means data and the authentication OID to the server 40.

In an embodiment, the server 40 may store the authentication means data and the authentication OID as the real-time information of the user authentication request device 20.

Specifically, the server 40 may issue an authentication OID "100103037" according to an authentication OID issuance request of the user authentication request device 20 corresponding to K01 and transmit the issued authentication OID to the user authentication request device 20, and the user authentication request device 20 may transmit the authentication means data and the issued authentication OID to the server 40. The server 40 may store the authentication OID "100103037" and the authentication means data in the real-time information of the user authentication request device 20 corresponding to K01 among the pieces of real-time information of the user authentication request device 20 stored in the server 40.

In an embodiment, in operation 1106, the user authentication request device 20 may monitor a value of the authentication OID. In another embodiment, the transmitting of the authentication means data and the authentication OID and the monitoring of the value of the authentication OID by the user authentication request device 20 may be simultaneously performed.

In an embodiment, in operation 1107, the user authentication device 10 may obtain the authentication means data and the authentication OID from the server 40.

In an embodiment, in operation 1108, the user authentication device 10 may generate an authentication result value by comparing the authentication means data with registration data.

In an embodiment, in operation 1109, the user authentication device 10 may set the value of the authentication OID, based on the authentication result value.

In an embodiment, in operation 1110, the user authentication request device 20 may perform a preset function, based on the value of the authentication OID.

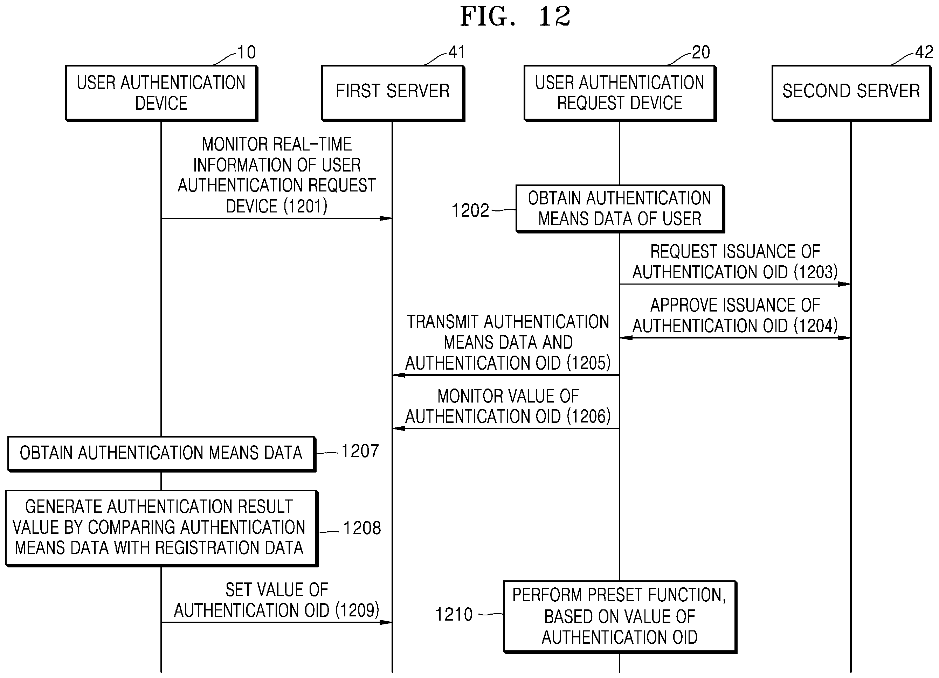

FIG. 12 is a flowchart of a user authentication method according to another embodiment.

Descriptions of parts of the embodiments described with reference to FIGS. 3, 4, and 10, which may be equally applied to or analogously applied to the embodiment illustrated in FIG. 12, are omitted.

In an embodiment, a user authentication system may include a first server 41 which stores real-time information of each of user authentication request devices capable of performing user authentication, and a second server 42 which issues an authentication OID and stores overall codes and information for user authentication. In an embodiment, the first server 41 may refer to an RTDB server, and the second server 42 may refer to a main server.

In an embodiment, in operation 1201, a user authentication device 10 may monitor real-time information of a user authentication request device 20 through the first server 41.

In an embodiment, in operation 1202, the user authentication request device 20 may obtain authentication means data of a user.

In an embodiment, in operation 1203, the user authentication request device 20 may request the second server 42 to issue an authentication OID.

In an embodiment, in operation 1204, the second server 42 may approve the issuance of the authentication OID and may transmit the issued authentication OID to the user authentication request device 20.

In an embodiment, in operation 1205, the user authentication request device 20 may transmit the authentication means data and the authentication OID to the first server 41.

In an embodiment, in operation 1206, the user authentication request device 20 may monitor a value of the authentication OID.

In an embodiment, in operation 1207, the user authentication device 10 may obtain the authentication means data.

In an embodiment, in operation 1208, the user authentication device 10 may generate an authentication result value by comparing the authentication means data with registration data.

In an embodiment, in operation 1209, the user authentication device 10 may set the value of the authentication OID stored in the first server 41.

In an embodiment, in operation 1210, the user authentication request device 20 may perform a preset function, based on the value of the authentication OID.

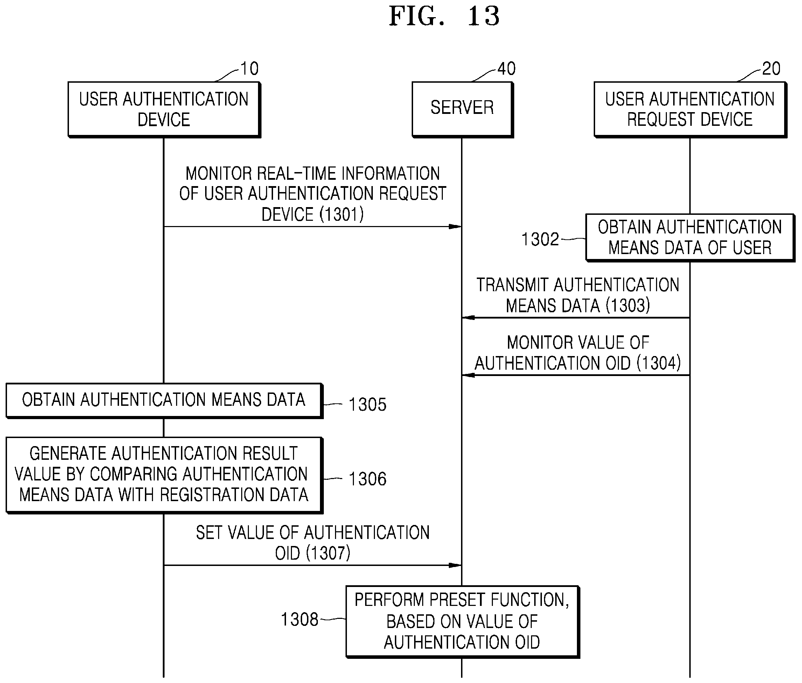

FIG. 13 is a flowchart of a user authentication method according to another embodiment.

Descriptions of parts of the embodiments described with reference to FIGS. 3, 4, and 10, which may be equally applied to or analogously applied to the embodiment illustrated in FIG. 13, are omitted.

In an embodiment, in operation 1301, a user authentication device 10 may monitor real-time information of a user authentication request device 20 through a server 40.

In an embodiment, in operation 1302, the user authentication request device 20 may obtain authentication means data of a user.

In an embodiment, in operation 1303, the user authentication request device 20 may transmit the authentication means data to the server 40.

In an embodiment, in operation 1304, the user authentication request device 20 may monitor a value of an authentication OID through the server 40.

In an embodiment, in operation 1305, the user authentication device 10 may obtain the authentication means data.

In an embodiment, in operation 1306, the user authentication device 10 may generate an authentication result value by comparing the authentication means data with registration data.

In an embodiment, in operation 1307, the user authentication device 10 may set the value of the authentication OID stored in the server 40.

In an embodiment, in operation 1308, the server 40 may perform a preset function, based on the set value of the authentication OID.

In an embodiment, when the value of the authentication OID indicates that user authentication has succeeded, the server 40 may perform the preset function. For example, the server 40 may record a user's check-in or check-out time, may perform payment through communication with a payment server, or may transmit a control signal to open an access control device, such as a speed gate installed for access control.

In an embodiment, when the value of the authentication OID indicates that user authentication has failed, the server 40 may return to operation 1301 and perform the user authentication process again from the beginning.

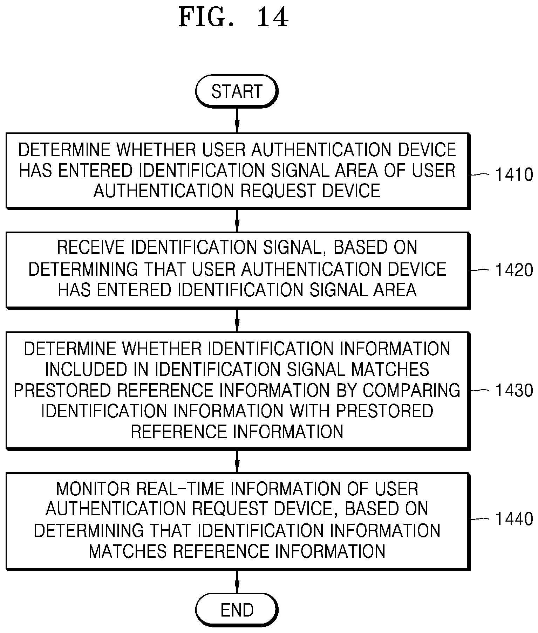

FIG. 14 is a flowchart of a method, performed by a user authentication device, of monitoring real-time information of a user authentication request device, according to an embodiment.

Referring to FIG. 14, in operation 1410, the user authentication device may determine whether the user authentication device has entered an identification signal area of the user authentication request device.

Referring to FIG. 14, in operation 1420, the user authentication device may receive an identification signal, based on determining that the user authentication device has entered the identification signal area of the user authentication request device.

Referring to FIG. 14, in operation 1430, the user authentication device may determine whether identification information included in the identification signal matches prestored reference information by comparing the identification information with the prestored reference information.

Referring to FIG. 14, in operation 1440, the user authentication device may monitor real-time information of the user authentication request device through the server, based on determining that the identification information matches the reference information.

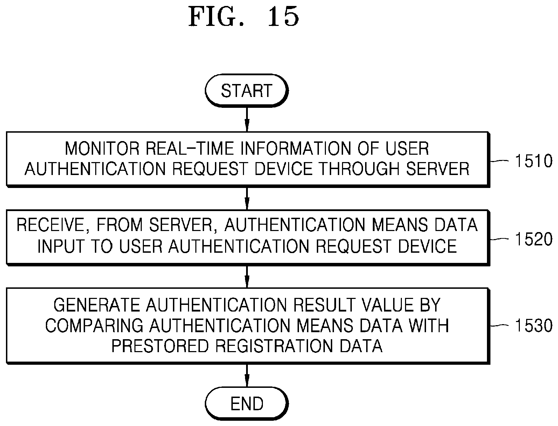

FIG. 15 is a flowchart of a user authentication method performed by a user authentication device, according to an embodiment.

Referring to FIG. 15, in operation 1510, the user authentication device may monitor real-time information of a user authentication request device through a server.

Referring to FIG. 15, in operation 1520, the user authentication device may receive, from the server, authentication means data input to the user authentication request device.

Referring to FIG. 15, in operation 1530, the user authentication device may generate an authentication result value by comparing the authentication means data with prestored registration data.

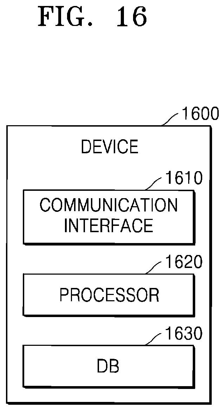

FIG. 16 is a block diagram of a device 1600 according to an embodiment.

The device 1600 illustrated in FIG. 16 may be at least one of the user authentication device 10, the user authentication request device 20, or the server 40, which has been described above.

Referring to FIG. 16, the device 1600 may include a communication interface 1610, a processor 1620, and a DB 1630. Only components related to the embodiment are illustrated in the device 1600 of FIG. 16. Therefore, it will be understood by those of ordinary skill in the art that, in addition to the components illustrated in FIG. 16, other general-purpose components may be further included.

The communication interface 1610 may include one or more components which enable wired/wireless communication with an external server or an external device. For example, the communication interface 1610 may include at least one of a short-range communication interface (not shown), a mobile communication interface (not shown), and a broadcasting reception interface (not shown).

The DB 1630 is hardware which stores various data processed within the device 1600, and may store a program for processing and control by the processor 1620. The DB 1630 may store payment information, user information, or the like.

The DB 1630 may include random access memory (RAM), such as dynamic RAM (DRAM) or static RAM (SRAM), read-only memory (ROM), electrically erasable programmable ROM (EEPROM), compact-disc ROM (CD-ROM), Blu-ray or other optical disk storage, hard disk drive (HDD), solid state drive (SSD), or flash memory.

The processor 1620 may control the overall operations of the device 1600. For example, the processor 1620 may execute programs stored in the DB 1630 to perform overall control on an input interface (not shown), a display (not shown), the communication interface 1610, the DB 1630, or the like. The processor 1620 may execute the programs stored in the DB 1630 to control the operation of the device 1600.

The processor 1620 may control at least some of the operations of the device 1600 described above.

The processor 1620 may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electrical units for performing functions.

In an embodiment, the device 1600 may be a mobile electronic device. For example, the device 1600 may be implemented as a smartphone, a tablet PC, a PC, a smart television (TV), a PDA, a laptop, a media player, a navigation system, a device on which a camera is mounted, and other mobile electronic devices. Furthermore, the device 1600 may be implemented as a wearable device, such as a watch, glasses, a hair band, or a ring, which has a communication function and a data processing function.

The disclosure may provide a user authentication system capable of improving user convenience while maintaining a high level of security.

Furthermore, in the disclosure, when a user accesses a user authentication request device, real-time information of the user authentication request device may be automatically monitored, authentication means data generated by the user authentication request device may be received, and user authentication may be performed.

Effects to be achieved by the embodiments are not limited to those described above, and other effects that are not described herein will be clearly understood from the description of the disclosure by those of ordinary skill in the art.

Embodiments according to the disclosure may be implemented in the form of a computer program which may be executed through various components on a computer, and such a computer program may be recorded on a computer-readable medium. At this time, the medium may include a magnetic medium, such as hard disk, floppy disk, and magnetic tape, an optical recording medium, such as CD-ROM and digital versatile disc (DVD), a magneto-optical medium, such as floptical disk, and hardware devices specially configured to store and execute program instructions, such as ROM, RAM, or flash memory.

On the other hand, the computer program may be specially designed and configured for the disclosure, or may be known and available to those of ordinary skill in the art of computer software. Examples of the computer program may include not only machine language code generated by a compiler but also high-level language code which is executable using an interpreter or the like by a computer.

According to an embodiment, the methods according to various embodiments of the disclosure may be provided as a part of a computer program product. The computer program product may be traded as a commercial product between a seller and a buyer. The computer program product may be distributed in the form of a machine-readable storage medium (for example, CD-ROM), or may be distributed (for example, downloaded or uploaded) online, either via an application store (for example, Play Store^{™}) or directly between two user devices. In the case of the online distribution, at least part of the computer program product may be stored at least temporarily on a machine-readable storage medium, such as a server of a manufacturer, a server of an application store, or a memory of a relay server, or may be temporarily generated.

Operations constituting methods according to the disclosure may be performed in any suitable order unless otherwise indicated herein or otherwise clearly contradicted by context. The disclosure is not necessarily limited by the order of operations. The use of any and all examples or exemplary terms (e.g., "such as") provided herein is simply intended to describe the disclosure in detail, and the scope of the disclosure is not limited by the examples or exemplary terms unless otherwise claimed. In addition, it will be understood by those of ordinary skill in the art that various modifications, combinations and changes may be made according to design conditions and factors within the scope of the appended claims or equivalents thereof.

Therefore, it will be understood that the spirit of the disclosure should not be limited to the embodiments described above, and the claims and all equivalent modifications fall within the scope of the disclosure.

## Claims

1. A method, performed by a user authentication device, of monitoring real-time information of a user authentication request device, the method comprising:
determining whether the user authentication device has entered an identification signal area set based on a location of the user authentication request device;
receiving an identification signal, based on determining that the user authentication device has entered the identification signal area;
determining whether identification information included in the identification signal matches prestored reference information by comparing the identification information with the prestored reference information; and
monitoring real-time information of the user authentication request device through a server, based on determining that the identification information matches the prestored reference information.

2. The method of claim 1, wherein the monitoring comprises:
calculating a distance to the user authentication request device; and
monitoring the real-time information through the server, based on the distance to the user authentication request device being equal to or less than a predefined reference distance.

3. The method of claim 1, wherein the monitoring comprises monitoring the real-time information of the user authentication request device by using a unique identifier (ID) of the user authentication request device.

4. The method of claim 1, wherein the receiving of the identification signal comprises receiving the identification signal, based on an identification signal scanning function being in an on state.

5. The method of claim 1, wherein the determining of whether the user authentication device has entered the identification signal area comprises determining whether the user authentication device has entered the identification signal area, based on at least one of a real-time location of the user authentication device and a Bluetooth signal.

6. The method of claim 1, further comprising determining, based on the identification information, whether the user authentication request device is included in an authenticatable target of the user authentication device, based on receiving the identification signal.

7. The method of claim 1, further comprising changing an identification signal scanning function to an off state, based on determining that the user authentication device has departed from the identification signal area.

8. The method of claim 1, further comprising changing an identification signal scanning function to an off state and then changing the identification signal scanning function to an on state, based on failing to receive the identification signal for a predefined time.

9. The method of claim 1, further comprising:
changing an identification signal scanning function to an off state, based on at least one of a location detection function, a network connection function, and a Bluetooth signal transmission/reception function being in an off state; and
changing the identification signal scanning function to an on state, based on the location detection function, the network connection function, and the Bluetooth signal transmission/reception function being in an on state.

10. The method of claim 1, comprising:
receiving authentication means data input to the user authentication request device from the server; and
generating an authentication result value by comparing the authentication means data with prestored registration data.

11. The method of claim 11, further comprising:
receiving an authentication object identifier (OID) for user authentication; and
setting a value of the authentication OID stored in the server based on the authentication result value.

12. The method of claim 12, wherein the value of the authentication OID corresponds to any one of a value indicating the user authentication being successful and a value indicating the user authentication being failed.

13. The method of claim 1, wherein the real-time information includes at least one of authentication means data input to the user authentication request device and a value of an authentication OID.

14. A user authentication device comprising:
a memory storing at least one program; and
a processor configured to be operated by executing the at least one program,
wherein the processor is further configured to:
determine whether the user authentication device has entered an identification signal area set based on a location of a user authentication request device;
receive an identification signal, based on determining that the user authentication device has entered the identification signal area;
determine whether identification information included in the identification signal matches prestored reference information by comparing the identification information with the prestored reference information; and
monitor real-time information of the user authentication request device through a server, based on determining that the identification information matches the reference information.

15. A user authentication system comprising:
a user authentication device;
a user authentication request device; and
a server,
wherein the user authentication device is configured to:
determine whether the user authentication device has entered an identification signal area set based on a location of the user authentication request device;
receive an identification signal, based on determining that the user authentication device has entered the identification signal area;
determine whether identification information included in the identification signal matches prestored reference information by comparing the identification information with the prestored reference information; and
monitor real-time information of the user authentication request device through a server, based on determining that the identification information matches the reference information.
